# EUROPEAN PATENT SPECIFICATION

(11) **EP 1 571 253 B1**
(45) Date of publication and mention of the grant of the patent: **02.11.2016**
(21) Application number: 03813719.6
(22) Date of filing: 01.12.2003
(51) Int. Cl.: D06M 15/693, D06M 11/74, C08L 15/00, C08K 9/04

(54) **CORD FOR RUBBER REINFORCEMENT, PROCESS FOR PRODUCING THE SAME, AND RUBBER PRODUCT MADE WITH THE SAME**
KORD FÜR GUMMIARMIERUNG, VERFAHREN ZU SEINER HERSTELLUNG SOWIE DAMIT HERGESTELLTES GUMMIPRODUKT
CORDON DE RENFORT EN CAOUTCHOUC, PROCEDE DE PRODUCTION ASSOCIE ET PRODUIT EN CAOUTCHOUC FABRIQUE A L'AIDE DE CE DERNIER

(30) Priority: 02.12.2002 JP 2002349482
(43) Date of publication of application: 07.09.2005
(73) Proprietor: Nippon Sheet Glass Company, Limited, Tokyo 108-6321 (JP)
(72) Inventor: AKIYAMA, Mitsuharu, Nippon Sheet Glass Company, Limited, Tokyo 108-6321 (JP)
(74) Representative: Intès, Didier Gérard André
(86) International application number: PCT/JP2003/015311
(87) International publication number: WO 2004/057099

(56) References cited:
- EP-A- 0 672 716
- EP-A- 0 937 740
- EP-A- 0 943 725
- EP-A- 1 241 205
- JP-A- 4 103 634
- JP-A- 5 500 236
- JP-A- 7 259 928
- JP-A- 10 025 665
- JP-A- 2002 309 484
- JP-A- 2002 339 255
- US-A- 4 818 601
- US-A- 4 935 297
- US-A- 4 944 821

## Description

### TECHNICAL FIELD

The present invention relates to method for manufacturing a reinforcing cord for rubber reinforcement to be buried in a rubber product as a reinforcing material.

### BACKGROUND ART

In order to improve the strength and durability of rubber products such as rubber belts and rubber tires, it generally has been practiced to bury glass fibers, synthetic fibers, etc. in a matrix rubber as reinforcing fibers. Generally, however, the reinforcing fibers themselves have low adhesiveness to rubber. Accordingly, when the reinforcing fibers are buried in rubber without being subjected to surface processing, the following problems tend to be caused. That is, the reinforcing fibers and the rubber do not adhere to each other, or they adhere to each other but the adhesion to each other is not firm, which results in easy exfoliation while in use. Hence, in order to improve the adhesion of the reinforcing fibers to a matrix rubber and to prevent the quality of the reinforcing fibers from deteriorating, various coating films are formed on the reinforcing fibers. Such reinforcing fibers have been proposed conventionally (publication numbers JPS63-270877 from 1988, JPH6-306211 from 1994, JPH07-138831 from 1995, JPH07-179621 from 1995, EP 672 716 A2 from 1995, JPH10-238596 from 1998, JPH11-158744 from 1999, JPH11-217739 from 1999, JPH11-240308 from 1999, JPH11-241275 from 1999, JPH11-241276 from 1999, JP2002-309484, and JP2003-221785).

JPS63270877 describes a method of forming a coating film by applying a mixed processing agent of a condensate of resorcinol and formalin and a hydrogenated nitrile rubber latex (an H-NBR latex) to a glass fiber (a reinforcing fiber), and then drying and curing it. This reference describes that glass fiber cords manufactured by this method have high adhesiveness to a matrix rubber containing H-NBR as its main component.

With respect to a coating film to be formed on reinforcing fibers, it is necessary to change/adjust components to be contained therein and its internal structure according to the type and characteristics of the matrix rubber. This is because it depends on the type of the matrix rubber whether the coating film has high adhesiveness thereto. Hence, even if the glass fiber cords described in the above-mentioned reference are useful in the matrix rubber containing H-NBR as its main component, they do not always exhibit high adhesiveness to other types of matrix rubbers.

A rubber composition has been known that contains, as its main components, a hydrogenated nitrile rubber including zinc dimethacrylate dispersed therein (hereinafter also referred to as "H-NBR/ZDMA") and a hydrogenated nitrile rubber (hereinafter also referred to as "H-NBR"). Since rubber products formed using a matrix rubber containing H-NBR and H-NBR/ZDMA as their main components are excellent in heat resistance, they are suitable for uses such as timing belts of vehicle engines, etc. A reinforcing cord for rubber reinforcement that exhibits high adhesiveness to the above-mentioned matrix rubber has been proposed in JP11(1999)-241275A. This reinforcing cord for rubber reinforcement includes a reinforcing fiber as well as a first coating layer and a second coating layer that are formed sequentially on the reinforcing fiber. The first coating layer is formed with a processing agent that contains a condensate of resorcinol and formalin and a rubber latex. The second coating layer is formed with a processing agent that contains a rubber compound, a vulcanizing agent, and a maleimide vulcanizing auxiliary as its main components.

This reinforcing cord for rubber reinforcement, however, has problems in that the process of forming the coating layers is complicated due to the two-layer structure that is employed for the coating layers to be formed on the reinforcing fiber and the manufacturing cost is high. Furthermore, a severe burden is imposed on the environment because this reinforcing cord for rubber reinforcement is manufactured using the condensate of resorcinol and formalin and aqueous ammonia in forming the first coating layer and an organic solvent such as toluene in forming the second coating layer. It is especially indispensable to take measures to provide safe environments for workers.

### DISCLOSURE OF THE INVENTION

The present invention was made with attention being given to the problems as described above. The present invention is intended to provide a method of manufacturing a reinforcing cord for rubber reinforcement that exhibits high adhesiveness to a matrix rubber containing H-NBR and H-NBR/ZDMA as its main components and that can be manufactured readily.

In order to achieve the above-mentioned objects, a method of manufacturing a reinforcing cord for rubber reinforcement of the present invention includes: (i) applying a coating liquid containing a rubber latex and a vulcanizing auxiliary onto a reinforcing fiber; and (ii) drying the coating liquid to form a coating film on the reinforcing fiber, wherein said vulcanizing auxiliary is a maleimide vulcanizing auxiliary present in the coating liquid in a weight ratio of solids contents of 30 to 70 parts for each 100 parts of rubber latex, the coating liquid includes a medium that contains at least 50 weight% of water and does not contain formalin, the rubber latex is an hydrogenated nitrile rubber latex, and the coating film accounts for 12 to 22% of the weight of the reinforcing cord.

Since an aqueous medium is used in forming the reinforcing cord for rubber reinforcement and in the method of manufacturing the same, the environment is not significantly affected. In addition, the working environment in which the process of forming the coating film is carried out can be improved. Moreover, according to the present invention, the adhesiveness to a matrix rubber that has high resistances to bending fatigue and high temperature can be improved dramatically through a simple process. Particularly, in the present invention, the coating film can be formed through a single coating process using an aqueous medium. In addition, the present invention allows rubber products that are required to have higher orders of heat resistance and bending fatigue resistance, such as timing belts, to be readily manufactured at
low cost.

### BEST MODE FOR CARRYING OUT THE INVENTION

Embodiments of the present invention are described below.

### Embodiment 1

In Embodiment 1, the description is directed to the reinforcing cord for rubber reinforcement of the present invention and the method of manufacturing the same. In the method of the present invention, a coating liquid (an aqueous adhesive) containing a rubber latex and a vulcanizing auxiliary is applied onto a reinforcing fiber. This coating liquid includes a medium (a liquid component) containing at least 50 weight% of water. The coating liquid then is dried and cured. Thus a coating film is formed on the reinforcing fiber.

The reinforcing fiber to be used in the present invention is not particularly limited in type and shape as long as it can be buried in a matrix rubber to improve the shape, stability and strength of the matrix rubber. Examples of the reinforcing fiber to be used herein include glass fibers, polyvinyl alcohol fibers that are typified by vinylon fibers, polyester fibers, polyamide fibers such as nylon and aramid (aromatic polyamide) fibers, carbon fibers, polyparaphenylene benzoxazole fibers, etc. Among them, the glass fibers that are excellent in heat resistance and tensile strength are used suitably.

The type of the glass fibers is not particularly limited. However, a high strength glass that is excellent in tensile strength is preferred to a common no-alkali glass due to its suitability for the intended use as reinforcing fibers. With respect to the filament that is the minimum element of a glass fiber, a common filament having a mean diameter of 5 to 13 µm is preferable. Preferably, the glass fiber has a core-sheath structure that is composed of a core fiber and three to eight peripheral fibers arranged around the core fiber. For instance, 800 to 2000 filaments bundled without being twisted can be used for the core fiber. On the other hand, bundles of 200 to 800 filaments twisted in the same direction can be used for the peripheral fibers. In such a core-sheath structure, the core fiber serves to effectively improve tensile strength of the reinforcing fiber while the peripheral fibers serve to effectively improve bending fatigue resistance of the reinforcing fiber. Accordingly, the reinforcing fiber having this core-sheath structure is suitable for the intended use such as timing belts, etc.

The shape of the reinforcing fiber is not particularly limited as long as it can be buried in a matrix rubber. For instance, the reinforcing fiber to be employed herein can be a staple or a filament or can be of a cord, rope, or canvas shape.

An aqueous vulcanizing auxiliary can be used as the vulcanizing auxiliary to be contained in the coating liquid. Aqueous dispersions are used that include maleimides such as bismaleimide, phenyl maleimide, N, N-m-phenylene dimaleimide, etc. Such a vulcanizing auxiliary contained in the coating liquid can improve the adhesion between the reinforcing fiber and the matrix rubber. Among others, a maleimide vulcanizing auxiliary is preferable since it specifically improves the adhesion between the reinforcing fiber and the matrix rubber.

The rubber latex to be contained in the coating liquid can be, for instance, an H-NBR latex. A H-NBR latex can improve the adhesion between the reinforcing fiber and the matrix rubber effectively. The aqueous medium to be described later can be used for the dispersion medium of the rubber latex, for instance.

The main components of the coating liquid are a rubber latex and a vulcanizing auxiliary. In this context, the "main components" denote components whose contents by percentage account for at least 50 weight% of the components (wherein liquids such as the solvent and dispersion medium are excluded from the components). That is, the total content by percentage of solid contents of the rubber latex and vulcanizing auxiliary is at least 50 weight% of the solid content of the coating liquid. Since the physical properties of a composition depend on contents by percentage of its components, its main components substantially determine the physical properties thereof. Accordingly, when the total content by percentage of the rubber latex and the vulcanizing auxiliary is at least 50 weight% of the coating film, the characteristics of the rubber latex and vulcanizing auxiliary dominate.

The medium of the coating liquid is an aqueous medium containing water whose content by percentage is at least 50 weight%. An aqueous medium has an excellent handling property, allows the concentrations of the above-mentioned components to be controlled easily, and reduces a burden on the environment markedly as compared to an organic medium.

The aqueous medium to be used herein can be water or a mixed medium of another medium and water. For instance, water or a mixed medium of water and lower alcohol can be used as the aqueous medium. In this context, the "lower alcohol" denotes alcohol whose carbon number is three or less, and it can be methyl alcohol, ethyl alcohol, n-propyl alcohol, or isopropyl alcohol. Even if the aqueous medium contains a medium other than water, the ratio of water in the aqueous medium is at least 50 weight% (preferably at least 80 weight%). Preferably, this aqueous medium contains no solvents that have harmful effects on the environment, such as formalin and ammonia. The components that are contained in the aqueous medium but do not remain after the formation of a coating film are not considered as components of the coating film. For example, in the case of a coating liquid including an aqueous medium containing lower alcohol, the lower alcohol is removed from the coating film substantially completely through heating that is carried out in forming the coating film. The lower alcohol contained in the aqueous medium therefore is not a component of the coating film.

Furthermore, carbon black may be blended into the coating liquid, as a component of the coating film. The addition of carbon black allows the cost for manufacturing a reinforcing cord for rubber reinforcement to be reduced and also allows the adhesion between the reinforcing cord for rubber reinforcement and the matrix rubber to be improved effectively.

Moreover, a peroxide may be added to the coating liquid, as a component of the coating film. The addition of the peroxide allows crosslinking between the coating film and the matrix rubber to be promoted and thereby the adhesion therebetween further improves. The type of the peroxide is not limited. The peroxide to be used herein can be an organic peroxide such as hydroperoxide, dialkyl peroxide, etc. The peroxide, however, is required to be one selected from those having a reaction velocity comparable with that of the vulcanizing agent that has been blended into the matrix rubber. Among various peroxides, cumene hydroperoxide to be employed in the examples described later is used suitably since it is excellent in adhesiveness and handling property.

With respect to the ratio (a weight ratio of solid contents) of the components of the coating film to be formed with the above-mentioned coating liquid, the ratio of rubber latex / maleimide vulcanizing auxiliary (such as bismaleimide) / carbon black / peroxide is in the range of 100 / 30∼70 / 0∼50 / 0∼20 (more preferably 100 / 30∼50 / 10∼20 / 5∼15). Particularly, the ratio between the rubber latex and the vulcanizing auxiliary is important. An excessively small content of vulcanizing auxiliary results in insufficient crosslinking between the coating film and the matrix rubber and exfoliation therefore tends to occur at the interface therebetween. On the other hand, an excessively large content of vulcanizing auxiliary results in a relative reduction in the content of the rubber latex. Accordingly, the strength of the coating film itself deteriorates, which results in a tendency of insufficient adhesion between the reinforcing fiber and the matrix rubber. A preferable combination of the above-mentioned components is, for instance, a combination of an H-NBR latex, a maleimide vulcanizing auxiliary (particularly bismaleimide), carbon black, and cumen hydroperoxide.

The coating liquid may contain other components such as an inorganic filler other than carbon black, a plasticizer, an antioxidant, a metal oxide, a crosslinking auxiliary, and a surfactant, as required.

The coating liquid can be prepared by mixing respective raw materials while stirring them. The order of addition of the raw materials is not particularly limited but they generally are put into a blender in decreasing order of amount.

The coating liquid thus prepared is applied to a reinforcing fiber and then is dried to be cured. Thus a coating film is formed. The method of applying and drying the coating liquid is not particularly limited. In an example of the method, first, a reinforcing fiber is immersed in a coating liquid that has been put in a container and thereby the coating liquid is applied to the reinforcing fiber. Thereafter, the reinforcing fiber to which the coating liquid has been applied is drawn up from the container and then is passed through a drying furnace and thereby the medium is removed. The drying conditions to be employed for removing the medium are not limited, but for instance, the reinforcing fiber may be exposed to an atmosphere having a temperature of 80° C to 160° C for 0.1 to 2 minutes.

Thus a reinforcing cord for rubber reinforcement is formed. The coating film accounts for a ratio in the range of 12 to 22 weight% of the reinforcing cord for rubber reinforcement. When this ratio is lower than 10 weight%, it is difficult to coat the whole surface of the reinforcing fiber with the coating film. On the other hand, when the ratio exceeds 30 weight%, a problem tends to occur that the coating liquid drops down in forming the coating film. In addition, in this case, the coating film is excessively thick, which tends to cause a problem that, for instance, the center portion and peripheral portion of the reinforcing fiber have different characteristics from each other. Several reinforcing cords for rubber reinforcement produced by the method of the present invention may be bundled together to be used.

### Embodiment 2

In Embodiment 2, a rubber product produced applying the method of the present invention is described. This rubber product includes a matrix rubber (hereinafter also referred to as a "matrix rubber (A)") and a reinforcing cord for rubber reinforcement buried in the matrix rubber (A). The reinforcing cord for rubber reinforcement is the reinforcing cord for rubber reinforcement produced by the method of the present invention described in Embodiment 1.

The matrix rubber (A) to be used herein can be a rubber containing, as its main component (at least 50 weight%), a mixed rubber of a hydrogenated nitrile rubber including zinc dimethacrylate dispersed therein (H-NBR/ZDMA) and a hydrogenated nitrile rubber (H-NBR). The mixture weight ratio of [H-NBR] / [H-NBR/ZDMA] is, for instance, in the range of 95 / 5 to 5 / 95. The matrix rubber (A) may contain other rubbers as long as it contains the above-mentioned mixed rubber as its main component. Well-known or commercial rubbers can be used for the H-NBR and H-NBR/ZDMA.

The rubber product can be obtained by burying the reinforcing cord for rubber reinforcement according to Embodiment 1 in the matrix rubber (A). The method of burying the reinforcing cord for rubber reinforcement in the matrix rubber is not particularly limited. A well-known method can be employed without any modifications. The rubber product thus obtained has both high heat resistance derived from the characteristics of the matrix rubber and high strength and bending fatigue resistance that are provided by the reinforcing cord for rubber reinforcement buried in the matrix rubber.

Accordingly, this rubber product is used suitably as a rubber product that is required to have
heat resistance, high strength, and bending resistance, and it is particularly suitable for timing belts of vehicle engines, etc.

From another aspect, the present invention relates to a method of manufacturing a rubber product. This manufacturing method includes the manufacturing method according to Embodiment 1 and a process of burying a reinforcing cord for rubber reinforcement manufactured by the manufacturing method according to Embodiment 1 in a matrix rubber.

### EXAMPLES

Hereinafter, the present invention is described further in detail using examples. In the following examples, the dispersion medium of the latex is water.

### Example 1

Three glass fibers (that each had an E-glass composition and were formed of 200 glass filaments whose mean diameter was 9 µm) were bundled together. A coating liquid whose components are indicated in Table 1 below then was applied to the glass fibers. Thereafter, the glass fibers to which the coating liquid had been applied were dried in a drying furnace at 150°C for one minute. Thus, a coating film was formed.

**Table 1**

| Components | Ratio |
|---|---|
| H-NBR Latex (Solid Content: 40 weight%) (*1) | 100 parts by weight |
| Bismaleimide Water Dispersion (Solid Content: 50 weight%) | 50 parts by weight |

| | |
|---|---|
| (*1) Zetpol Latex (manufactured by ZEON Corporation) | |

Subsequently, the glass fibers with the coating film formed thereon were twisted at a rate of 8 times/10 cm. Thereafter, 11 glass fibers, each of which was formed of the glass fibers twisted as described above, were bundled together and then further were twisted at a rate of 8 times/10 cm. Thus a reinforcing cord for rubber reinforcement was obtained. The coating film accounted for 20 weight% of the total weight of the reinforcing cord for rubber reinforcement.

Subsequently, evaluations were made with respect to adhesion between the above-mentioned reinforcing cord for rubber reinforcement and the matrix rubber indicated in Table 2 below. First, a specimen (25 mm (width) × 50 mm (length) × 5 mm (thickness)) having the composition indicated in Table 2 was prepared. The reinforcing cord for rubber reinforcement was placed on the specimen in parallel to the long sides of the specimen. This was heated at 170°C for 30 minutes and thereby the reinforcing cord for rubber reinforcement and the specimen were bonded to each other. After this heat bonding, the specimen was stretched with a tensile tester in the direction in which the fibers had been arranged, and thereby the peel strength between the matrix rubber and the reinforcing cord was measured. Furthermore, the fracture surfaces of the specimen were observed visually and thereby it was checked whether the fracture was "rubber fracture" in which the whole matrix rubber remained on the reinforcing cord side or "interfacial exfoliation" in which the matrix rubber did not remain on the reinforcing cord side at all. The results are indicated in Table 6 below.

**Table 2**

| Components | Ratio |
|---|---|
| H-NBR(*2) | 70 parts by weight |
| H-NBR/ZDMA(*3) | 30 parts by weight |
| ZnO | 10 parts by weight |
| Stearic Acid | 1 part by weight |
| Carbon Black | 30 parts by weight |
| Trioctyl Trimellitate | 5 parts by weight |
| Sulfur | 0.1 part by weight |
| 1,3-bis-(t-butylperoxy-isopropyl)-benzene | 6 parts by weight |

| | |
|---|---|
| (*2) ZETPOL2020 (manufactured by ZEON Corporation) (*3) ZSC2000L (manufactured by ZEON Corporation) | |

### Example 2

A coating liquid composed of the components indicated in Table 3 below was applied instead of the coating liquid used in Example 1. The H-NBR latex was identical to that used in the coating liquid of Example 1 (this also applies to the coating liquids to be described below). A reinforcing cord was produced by the same method as that employed in Example 1 except that the above-mentioned coating liquid was used. Thereafter, its adhesiveness to the matrix rubber was evaluated by the same method as that employed in Example 1. The results are indicated in Table 6 below.

**Table 3**

| Components | Ratio |
|---|---|
| H-NBR Latex (Solid Content: 40 weight%) | 100 parts by weight |
| Bismaleimide Water Dispersion (Solid Content: 50 weight%) | 50 parts by weight |
| Carbon Black Water Dispersion (Solid Content: 30 weight%) | 20 parts by weight |

### Example 3

A reinforcing cord was produced by the same method as that employed in Example 1 except that a coating liquid composed of the components indicated in Table 4 below was applied instead of the coating liquid used in Example 1. Thereafter, its adhesiveness to the matrix rubber was evaluated by the same method as that employed in Example 1. The results are indicated in Table 6 below.

**Table 4**

| Components | Ratio |
|---|---|
| H-NBR Latex (Solid Content: 40 weight%) | 100 parts by weight |
| Bismaleimide Water Dispersion (Solid Content: 50 weight%) | 50 parts by weight |
| Carbon Black Water Dispersion (Solid Content: 30 weight%) | 20 parts by weight |
| Cumene Hydroperoxide (Peroxide) | 12 parts by weight |

### Comparative Example 1

A reinforcing cord was produced by the same method as that employed in Example 1 except that a coating liquid composed of the components indicated in Table 5 below was applied instead of the coating liquid used in Example 1 and the temperature inside the drying furnace was set at 230°C. Thereafter, its adhesiveness to the matrix rubber was evaluated by the same method as that employed in Example 1. The results are indicated in Table 6 below.

**Table 5**

| Components | Ratio |
|---|---|
| H-NBR Latex (Solid Content: 40 weight%) | 65 parts by weight |
| Condensate of Resorcinol and Formalin (Solid Content: 8 weight%) (Resorcinol/Formalin = 1/1.3 (mole ratio)) | 30 parts by weight |
| 25% Aqueous Ammonia | 1 part by weight |
| Water | 4 parts by weight |

**Table 6**

| | Example 1 | Example 2 | Example 3 | Comparative Example 1 |
|---|---|---|---|---|
| Components of Aqueous Adhesive | H-NBR Latex Bismaleimide | H-NBR Latex Bismaleimide Carbon Black | H-NBR Latex Bismaleimide Carbon Black Peroxide | H-NBR Latex RF Condensate |
| Adhesive Strength | 80 N/10 mm | 110 N/10 mm | 130 N/10 mm | 40 N/10 mm |
| Fracture Type | Rubber Fracture | Rubber Fracture | Rubber Fracture | Interfacial Exfoliation |

As shown in Table 6, the reinforcing cords for rubber reinforcement of the present invention had high adhesiveness to the matrix rubber containing the mixed rubber of H-NBR and H-NBR/ZDMA as its main component.

### INDUSTRIAL APPLICABILITY

The present invention can be applied to reinforcing cords for rubber reinforcement to be used for reinforcing rubber products and a method of manufacturing the same. Furthermore, the present invention can be applied to various rubber products such as timing belts, various power transmission belts, heat resistant hoses, etc.

## Claims

1. A method of manufacturing a reinforcing cord for rubber reinforcement, comprising :
(i) applying, onto a reinforcing fiber, a coating liquid containing a rubber latex, a vulcanizing auxiliary, and a medium that contains at least 50 weight % of water; and
(ii) drying the coating liquid to form a coating film on the reinforcing fiber; and **characterized in that** said rubber latex is a hydrogenated nitrile rubber latex, said vulcanizing auxiliary is a maleimide vulcanizing auxiliary present in the coating liquid in a weight ratio of solids contents of 30 to 70 parts for each 100 parts of rubber latex, the coating liquid does not contain formalin, and the coating film accounts for 12 to 22% of the weight of the reinforcing cord.

2. The method of manufacturing a reinforcing cord for rubber reinforcement according to claim 1, **characterized in that** the coating liquid comprises carbon black in a weight ratio of solids content of up to 50 parts for each 100 parts of rubber latex.

3. The method of manufacturing a reinforcing cord for rubber reinforcement according to any one of claims 1 or 2, **characterized in that** the coating liquid comprises a peroxide in a weight ratio of solids content of up to 20 parts for each 100 parts of rubber latex.

4. The method of manufacturing a reinforcing cord for rubber reinforcement according to any one of claims 1 to 3, **characterized in that** the medium is water or a mixed medium of water and lower alcohol.

## Patentansprüche

1. Verfahren zum Herstellen eines Verstärkungscords zur Kautschukverstärkung, umfassend:
(i) Auftragen einer Beschichtungsflüssigkeit, die ein Kautschuklatex, einen Vulkanisierungshilfsstoff und ein Mediums enthält, das wenigstens 50 Gew.-% Wasser enthält, auf eine Verstärkungsfaser und
(ii) Trocknen der Beschichtungsflüssigkeit, um einen Beschichtungsfilm auf der Verstärkungsfaser auszubilden, und
**dadurch gekennzeichnet, dass** der Kautschuklatex ein hydrogenierter Nitrilkautschuklatex ist, das Vulkanisierungshilfsmittel ein Maleimidvulkanisierungshilfsmittel ist, das in der Beschichtungsflüssigkeit in einem Feststoffgehalt-Gewichtsverhältnis von 30 bis 70 Teilen pro 100 Teile Kautschuklatex vorliegt, die Beschichtungsflüssigkeit kein Formalin enthält und der Beschichtungsfilm 12 bis 22 Gew.-% des Verstärkungscords ausmacht.

2. Verfahren zum Herstellen eines Verstärkungscords zur Kautschukverstärkung nach Anspruch 1, **dadurch gekennzeichnet, dass** die Beschichtungsflüssigkeit Kohlenschwarz in einem Feststoffgehalt-Gewichtsverhältnis von bis zu 50 Teilen pro 100 Teile Kautschuklatex umfasst.

3. Verfahren zum Herstellen eines Verstärkungscords zur Kautschukverstärkung nach einem der Ansprüche 1 oder 2, **dadurch gekennzeichnet, dass** die Beschichtungsflüssigkeit ein Peroxid in einem Feststoffgehalt-Gewichtsverhältnis von bis zu 20 Teilen pro 100 Teile Kautschuklatex umfasst.

4. Verfahren zum Herstellen eines Verstärkungscords zur Kautschukverstärkung nach einem der Ansprüche 1 bis 3, **dadurch gekennzeichnet, dass** das Medium Wasser oder ein aus Wasser und einem niedrigmolekularen Alkohol gemischtes Medium ist.

## Revendications

1. Procédé de fabrication d'une corde de renfort pour renforcement du caoutchouc, comprenant :
(i) l'application, sur une fibre de renfort, d'un liquide de revêtement contenant un latex de caoutchouc, un auxiliaire de vulcanisation, et un milieu qui contient au moins 50 % en poids d'eau ; et
(ii) le séchage du liquide de revêtement pour former un film de revêtement sur la fibre de renfort ; et
**caractérisé en ce que** ledit latex de caoutchouc est un latex de caoutchouc nitrile hydrogéné, ledit auxiliaire de vulcanisation est un auxiliaire de vulcanisation maléimide présent dans le liquide de revêtement dans un rapport en poids de fractions solides de 30 à 70 parties pour 100 parties de latex de caoutchouc, le liquide de revêtement ne contient pas de formol, et le film de revêtement représente de 12 à 22 % du poids de la corde de renfort.

2. Procédé de fabrication d'une corde de renfort pour renforcement du caoutchouc selon la revendication 1, **caractérisé en ce que** le liquide de revêtement comprend du noir de carbone dans un rapport en poids de fractions solides pouvant aller jusqu'à 50 parties pour 100 parties de latex de caoutchouc.

3. Procédé de fabrication d'une corde de renfort pour renforcement du caoutchouc selon l'une quelconque des revendications 1 ou 2, **caractérisé en ce que** le liquide de revêtement comprend un peroxyde dans un rapport en poids de fractions solides pouvant aller jusqu'à 20 parties pour 100 parties de latex de caoutchouc.

4. Procédé de fabrication d'une corde de renfort pour renforcement du caoutchouc selon l'une quelconque des revendications 1 à 3, **caractérisé en ce que** le milieu est l'eau ou un milieu mixte constitué d'eau et d'un alcool inférieur.
